# EUROPEAN PATENT SPECIFICATION

(11) **EP 2 003 963 B1**
(45) Date of publication and mention of the grant of the patent: **09.08.2017**
(21) Application number: 07732116.4
(22) Date of filing: 23.03.2007
(51) Int. Cl.: A01N 25/08, A01N 25/18, A01M 1/02, A01P 19/00

(54) **A TRAP OR DISPENSER**
FALLE ODER SPENDER
PIEGE OU DISTRIBUTEUR

(30) Priority: 24.03.2006 GB 0605966
(43) Date of publication of application: 24.12.2008
(73) Proprietor: Exosect Limited, Colden Common Winchester Hampshire SO21 1TH (GB)
(72) Inventor: HAMILTON BAXTER, Ian, Hampshire SO21 1TH (GB)
(74) Representative: Schlich, George
(86) International application number: PCT/GB2007/001054
(87) International publication number: WO 2007/110601

(56) References cited:
- WO-A-01/50857
- WO-A-2005/056062
- US-A- 6 001 346
- US-A1- 2002 182 977

## Description

The present invention relates to a trap for capturing an arthropod. The present invention also relates to a dispenser for attracting an arthropod. In particular the trap or dispenser comprises a semiochemical.

It is well known to use semiochemicals in arthropod and pest management and particularly in insect pest management. This use of semiochemicals is rapidly growing, particularly in agriculture and forestry, partly as a result of the pressure to reduce pesticide use and pesticide residues in agricultural production.

Semiochemicals are known to be used as attractants: (i) for use in monitoring population levels of target pests; (ii) in mass trapping techniques; (iii) for use in pest control through lure and kill techniques. Each of these techniques will be briefly discussed.

Monitoring of infestation levels is crucial in pest control. The target pest can be monitored by placing traps in the target area which attract the target pest to the trap through the use of a semiochemical. The semiochemical used is generally specific to at least the target pest. The most commercially exploited semiochemicals for this use are pheromones (such as Codlemone, the sex pheromone for the Codling Moth), but others used include allelochemicals (such as ethyl (2E,4Z)-2,4-decadienoate, an ester produced by the Bartlett pear, a bisexual kairomone attractant for the Codling Moth) and parapheromones. Parapheromones are synthetic chemicals that are not produced naturally but which mimic pheromones (such as Trimedlure, tert-Butyl 4-(and 5)-chloro-trans-2-methylcyclohexanecarboxylate, a parapheromone attractant for Mediterranean Fruit Fly which acts as a sexual pheromone attractant). The monitoring of infestations enables decisions to be made as to if and when to apply pesticides. In order to ensure representative monitoring, the semiochemical lures have to be attractive enough to lure the target insect. Thus attractant longevity is important, otherwise lures need to be changed regularly. Regular changing of lures is labour intensive and costly in terms of labour input and product purchasing.

Mass trapping works in a similar way to monitoring, but on a much larger scale. Mass trapping has the aim of population control. The purpose is to trap enough of the target pest population to control it and thereby reduce the damage it causes. Traps with suitable attractants are placed in the target area in much higher numbers than would be the case with monitoring where the aim is to trap and count a representative proportion of the total infestation. Again, various types of semiochemicals may be used to attract and trap the target. As explained above, lures need to remain sufficiently active for this technique to work. Often this results in regular lure changes, which has the disadvantages outlined above. This technique is typically less efficacious than other pest control techniques such as mating disruption.

In Lure & kill attracticide products and techniques, the target pest is attracted to dispensers which contain control agents, most usually chemical pesticides. When the target pest comes into contact with the pesticide, it is sterilised or killed. Lure & Kill systems are heavily dependent on the attractant bringing the pest into contact with the pesticide in the dispenser. Traditional attractants used include protein hydrolysates, food baits and semiochemicals. Where semiochemicals are used, longevity in the field is crucial for the reasons covered above.

It will be understood that in order for the use of semiochemicals to be effective in any or all of the arthropod control techniques discussed above, the rate of release of the semiochemical is extremely important.

Numerous commercial lures for in use monitoring, mass trapping, and lure and kill products are known. The commercial standard lure is in the form of a red rubber septum. This is cheap and easy to load with pheromone. Three types of septa are generally used, natural rubber, red rubber and grey rubber. Rubber septa are generally made from natural rubber composed of polyisoprene molecules. However, synthetic polymers are sometimes used for producing septa, including other materials are sometimes used including nitrile rubber (NBS), a co-polymer of acrylonitrile and butadiene, styrene butadiene co-polymer (SBR) and "triblock" copolymers, also known as styrene-butadiene-styrene (SBS) and styrene-isoprene-styrene (SIS) rubbers. As such the exact release rates of rubber septa will differ according to the materials used. The present inventors' experiments have shown that the Grey septum appears to have slower release properties than the red or natural rubber septa. The longevity of natural and red is very short, and they tend to lose much of the semiochemical in a short space of time, after which release tends to be more constant and attractive to the target. Red rubber septa tend to remain attractive for 2 - 3 weeks under typical field conditions.

More recent lure dispenser matrices include the following:
- "SuperLure": A reservoir based permeable membrane dispenser. This is the subject matter of US patent 5,750,129. In particular US 5,750,129 discloses a composite polymer semiochemical controlled release dispenser. This dispenser is manufactured by Phero Tech Inc. When used in codling moth monitoring the manufacturer has recommended changing every 6-8 weeks.
- "BioLure": A membrane based lure. Manufactured by Suterra Inc. In CM Suterra has recommended changing every 4 - 6 weeks.
- "MegaLure": A grey rubber septa. Manufactured by Trece Inc. In CM Trece has recommended changing every 6 - 8 weeks.
- "NoMate": A fibre lure. Manufactured by Scentry Inc. In CM Scentry has recommended a change interval of 8 weeks.

Most of the lures known in the prior art have substantially first-order release rates. The term "first-order release rate" as used herein means that the release rate of the semiochemical from the lure is a function of and depends on the amount of residual semiochemical dispersed in the lure.

Ideally lures would provide zero order (constant) release of a semiochemical over the entire season. This means that the target arthropods would be attracted to the lure for the whole season without the need to change/replenish the semiochemical attractant. To date very few zero-order lures have been developed. The life of the lure between the upper and lower release thresholds is crucial to its efficacy. Above the upper release rate threshold the release rate may confuse the target insect or repel it from the trap. Below the lower release rate threshold the insect will not be attracted to the lure, dispenser or trap. The longer the release rate stays between these thresholds the more attractive the semiochemical lure will be and the more efficacious the product. The inventors are not aware of any lure to date that has provided season long activity in the desired release rate range. This means that users have to periodically replace the lure. This is time consuming and labour intensive.

The use of paraffin wax formulated as an aqueous emulsion or a solid comprising a pheromone suitable for application to a surface of a tree or crop for mating disruption of insect pests is known from US 6,001,346. This document discloses the use of such compositions in traditional mating disruption techniques. Traditional mating disruption techniques differ from the pest control techniques (i), (ii) and (iii) listed above in that the pests are not attracted or lured towards a specific pheromone releasing site. Instead, in traditional mating disruption the target area is 'flooded' with pheromone from the target species. In some cases the pheromone is sprayed directly onto the crop, but mostly the pheromone is released from pheromone dispensing products which act as reservoirs of the pheromone. The aim of the pheromone dispensing product is to release sufficient quantities of pheromone to create a generally homogenous "fog" of pheromone in the target area during the period when the crop is susceptible to attack from the offspring of the target pest. The high levels of sex pheromone in the target area reduce the ability of the male to find the female thereby reducing successful mating or delaying mating, such delay reducing the fecundity or fertility of the female and reducing the viability of the eggs laid. In this way the mating of the target is disrupted and the number of viable offspring is reduced, thereby reducing the local population. In order to maintain efficacy, high numbers of traditional pheromone dispensing products, each containing and dispensing high levels of the pheromone, are required. Furthermore, when the pest is a flying insect, these need to release sufficient pheromone for a period which covers the period of flight of the specific target insect.

The present inventors have surprisingly found that the inclusion of a semiochemical in wax, and in particular in a solid wax matrix has advantageous lure properties for attracting arthropod pests. In particular the inventors have found that the release rate of a semiochemical from a wax, and in particular from a solid wax matrix comprising carnauba wax is substantially zero order. Other advantages of the present invention include, for example, that the solid wax matrix is biodegradable, cheap and easy to make, whilst having advantageous semiochemical release and lure properties.

The present invention seeks to address at least some of the problems of the prior art lures. In particular there is a need to provide a trap and/or a dispenser for attracting arthropods which provides release of the semiochemicals at effective rates for long enough to eradicate or at least reduce the number of times a season that the lure has to be replaced.

According to the present invention there is provided a solid wax matrix lure for attracting arthropods comprising:
from 50 to 99 % by weight of a first wax that is carnauba wax;
a second wax selected from paraffin wax, beeswax, lanolin, shellac wax, bayberry wax, sugar cane wax, ozocerite, ceresin wax, montan wax, candelilla wax, castor wax, microcrystalline wax, ouricury wax and rice bran wax; and
from 0.01 to 20% by weight of a semiochemical based on the total weight of the lure.

The invention also provides use of a lure as defined above to attract an arthropod by the controlled release of a semiochemical.

Each aspect as defined herein may be combined with any other aspect or aspects unless clearly indicated to the contrary. In particular any feature indicated as being preferred or advantageous may be combined with any other feature or features indicated as being preferred or advantageous.

As used herein the term "trap" is used to describe an apparatus in which an arthropod may be caught or retained. The term "trap" as used herein includes a mechanical device or an enclosed place or pit in which an arthropod may be caught or penned. It also includes anything resembling a trap or prison for an arthropod. It further includes, for example, an apparatus for ensnaring or retaining arthropods.

In one embodiment the trap may comprise a sticky surface. Upon contact with said sticky surface, the arthropod becomes attached and is prevented from escaping.

In a further embodiment of the present invention the trap comprises a housing having an inlet for allowing an arthropod to enter the trap. Suitable traps for use in the present invention include the commercially available Wing Trap, Delta Trap, Diamond Trap, Heliothis Trap, Bucket/ Funnel Trap, McPhail/ Globe traps, Jackson Traps, Milk Carton Trap, Sticky Boards, Boll Weevil Trap, Japanese Beetle Trap, Glue Trap, Probe Trap and Pitfall Trap.

The trap of the present invention may further comprise, for example, an inlet which comprises a combination of engineering to encourage entry and discourage exit, for example a funnel; a non-sticky killing/ retaining method; or an insecticide.

It will be understood that a variety of sizes and shapes of traps may be used in the present invention.

As used herein the term "dispenser" is used to describe an apparatus in which an arthropod may enter by means of an opening or inlet, and said arthropod may exit by means of an opening or outlet from said dispenser, wherein said opening or inlet and said opening or outlet may be the same or different.

Unlike the "trap" described above, the "dispenser" or bait station, as it is alternatively known, comprises an apparatus wherein arthropods, and in particular insects, are attracted to the disperser (and preferably into the dispenser), and are subsequently released into the surrounding environment.

In a preferred embodiment the dispenser of the present invention comprises a housing having an inlet for allowing an arthropod to enter the dispenser and an outlet for allowing said arthropod to exit the dispenser, wherein said inlet and said outlet may be the same or different.

The trap and/or dispenser of the present invention may comprise a pesticide or a further semiochemical.

By the term "pesticide" as used herein is meant any substance which can be used in the control of agricultural, natural environmental, public health, stored product and domestic pests, such as insects. These include, but are not limited to insecticides, chemosterilants, anti-microbial agents, acaricides, ovicides, larvicides, insect growth regulators, fungicides, fungi, viruses and their metabolites, bacteria, bacterial toxins and their metabolites, essential oils, larvicides, nematodes or any combination thereof.

The pesticide or further semiochemical may be dissolved in or located on a particulate. The particulates may be attracted to and/or adhesive to arthropods, and preferably insects such that they are retained thereon. The particulates preferably have dimensions of from 0.1 - 50 micrometres, more preferably 5 - 30 micrometres.

In one embodiment of the present invention the target arthropod, preferably an insect is attracted to a dispenser containing a lure. Upon entering the dispenser the insect comes into contact with the sex pheromone of that species and/or particulates formulated with the sex pheromone of that species. The pheromone and/or particulates become attached to the insect and are retained thereon. The pheromone and/or particles attached to the target insect thereafter reduces the ability of the male to find females with whom they can mate due to the excess of sex pheromone released. The sex pheromone and/or particles formulated with the sex pheromone are transferred to males of the same species upon interaction. In this way mating is disrupted. The applicants have called this mating disruption by an auto-confusion technique. Crucial to the efficacy of mating disruption by an auto-confusion technique is the attractant and its longevity in the field. This method is discussed further below.

In a preferred embodiment the trap and/or dispenser of the present invention comprises a solid wax matrix having a semiochemical dispersed and/or dissolved and/or encapsulated therein.

As used herein the term "solid wax matrix" is used to describe solid wax into which a semiochemical may be dispersed and/or dissolved and/or encapsulated. The semiochemical is then released over time from the matrix.

The solid wax matrix having the semiochemical dispersed and/or dissolved and/or encapsulated therein acts as a lure for arthropods, in particular insects. It may be considered as a source that elicits an anemotactic response from an organism. In particular semiochemicals are used to elicit a chemo-anemotactic response from a target organism or organisms.

It will be understood that the waxes suitable for use in the present invention are readily available. Carnauba Wax, for example, is a naturally derived plant wax, obtained from the leaves of a palm tree known as Copernica cerifera. Typically carnauba wax contains esters of fatty acids (80-85%), fatty alcohols (10-15%), acids (3-6%) and hydrocarbons (1-3%). Specific for carnauba wax is the content of esterified fatty diols (about 20%), hydroxylated fatty acids (about 6%) and cinnamic acid (about 10%). Cinnamic acid, an antioxidant, may be hydroxylated or methoxylated. Advantages of using Carnauba Wax in the lure or as an attractant release substance include the high melting point which, at 78-85 °C is the highest melting point of any natural wax. This may be particularly important given that field temperatures can reach exceptionally high temperatures, particularly in US, South America, Africa and Australasia. The high melting point of Carnauba means that the wax matrix will be substantially unaffected by these high temperatures.

Volatile components such as semiochemicals are especially susceptible to degradation in the field, particularly through oxidation and UV degradation. Antioxidants and UV stabilisers are usually included in semiochemical release formulations. Carnauba Wax has the advantage that its make up includes natural antioxidants and the nature of Carnauba Wax and the manner in which we present it helps also to protect the semiochemical therein from UV degradation.

Furthermore, the purity of Carnauba, as a natural product, and the protection it affords from UV helps minimise the possibility of isomerisation seen in other lure matrices, particularly the red rubber septum.

Furthermore, Carnauba is a hard wax. It can therefore be effectively moulded and is easy to handle when set.

In a preferred embodiment the solid wax matrix comprises carnauba wax and paraffin wax. The weight ratio of the carnauba wax to paraffin wax may be in the range of from 99:1 to 1:99, more preferably from 50:1 to 1:50, or from 10:1 to 1:10, more preferably still from 5:1 to 1:5, and most preferably 2:1 to 1:2. Preferably in the solid wax matrix of the present invention the weight ratio of the carnauba wax to the paraffin wax is 99:1, 50:1, 25:1, 20:1, 10:1, 5:1, 2:1, 1:1, 1:2, 1:5, 1:10, 1:20, 1:25; 1:50 or 1:99

Preferably the solid wax matrix for use in the trap and/or dispenser of the present invention weighs less than 50g, more preferably it weighs less than 25g, more preferably still less than 5g, and most preferably, less than 3g.

The solid wax matrix of the present invention may have the shape of a sphere, pyramid, cuboid, parallelepiped, tube, column, disc, or any other suitable polyhedron.

Preferably the solid wax matrix has the shape of a cube. Preferably each dimension of the cube are less than 20 by 20 by 20 mm. In further embodiments the cube may, for example, have dimensions in the range of from 30mm by 30mm by 30mm to 1mm by 1mm by 1mm, more preferably in the range of from 20mm by 20mm by 20mm to 3mm by 3mm by 3mm, most preferably in the range of from 15mm by 15mm by 15mm to 5mm by 5mm by 5mm. Most preferably the cubes have the dimensions of 12mm by 12mm by 12mm or 5mm by 5mm by 5mm.

It will be understood that the solid wax matrix may take a variety of shapes and sizes.

Preferably the solid wax matrix of the present invention has a substantially zero order release rate of the semiochemical.

The term "zero-order release rate" as used herein means a substantially constant release rate of the semiochemical from the solid wax matrix, independent of the loading.

Thus, once equilibrium has been reached, a plot of the mass of semiochemical released versus time is linear.

Preferably the solid wax matrix of the present invention has a substantially zero order release rate of the semiochemical from the wax for at least 50 days, 60 days, 70 days, 80 days, more preferably at least 90 days, 100 days, 110 days, most preferably at least 120 days.

The term "semiochemical" as used herein is meant a chemical or specific blend of chemical substances which can elicit a specific behavioural response from an organism. Semiochemicals may be further divided into pheromones and allelochemicals. These terms are well known in the art and as used herein include synthetic chemicals or synthetic blends of chemical substances that are not produced naturally but which mimic the naturally occurring semiochemicals.

The specific amount and type of semiochemical used in the present invention is chosen such that the semiochemical is released from the wax matrix in sufficient quantities to act as a lure or attractant to a specific arthropod, and in particular an insect, more preferably an insect pest.

Suitable semiochemicals for use in the present invention include, but are not limited to insect semiochemicals comprising of single or multi-component blends of aliphatic compounds comprising chains of up to 20 carbon atoms, and containing up to three double bonds, epoxides and/or ketones. The aliphatic chain may also contain one or more aliphatic branches and a terminal oxygenated functionality, typically an alcohol, formate, acetate, ester, aldehyde or nitrate.

Suitable sex pheromones include, but are not limited to:
Alcohols: Hexan-1-ol; (Z)-3-hexen-1-ol; decan-1-ol; dodecan-1-ol; (Z)-8-dodecen-1-ol; (E)-8-dodecen-1-ol; (E)-9-dodecen-1-ol; (E,Z)-7,9-dodecadien-1-ol; (E,E)-8,10-dodecadien-1-ol; (E,Z)-8,10-dodecadien-1-ol; (Z,E)-8,10-dodecadien-1-ol; tetradecan-1-ol; (Z)-9-tetradecen-1-ol; (Z)-11-tetradecen-1-ol; (Z,E)-9,12-tetradecadien-1-ol; hexadecan-1-ol; (Z)-11-hexadecen-1-ol; octadecan-1-ol; (E,Z)-2,13-octadecadien-1-ol; eicosan-1-ol.
**Aldehydes:** Hexan-1-al; nonan-1-al; (E,E)-8,10-dodecadien-1-al; tetradecan-1-al; (Z)-9-tetradecen-1-al; (Z)-11-tetradecen-1-al; (Z,E)-9,12-tetradecadien-1-al; hexadecan-1-al; (Z)-7-hexadecen-1-al; (Z)-9-hexadecen-1-al; (Z)-11-hexadecen-1-al; (E)-11-hexadecen-1-al; (Z)-12-hexadecen-1-al; octadecan-1-al; (E)-2-octadecen-1-al; (Z)-13-octadecen-1-al; (E,Z)-2,13-octadecadien-1-al
**Acetates:** (Z)-3-hexen-1-yl acetate; decan-1-yl acetate; dodecan-1-yl acetate; (Z)-7-dodecen-1-yl acetate; (E)-7-dodecen-1-yl acetate; (E)-8-dodecen-1-yl acetate; (Z)-8-dodecen-1-yl acetate; (E)-9-dodecen-1-yl acetate; (Z)-9-dodecen-1-yl acetate; (E,E)-7,9- dodecadien-1-yl acetate; (E,Z)-7,9-dodecadien-1-yl acetate; (Z,E)-7,9-dodecadien-1-yl acetate; (Z,Z)-7,9-dodecadien-1-yl acetate; (E,E)-8,10-dodecadien-1-yl acetate; (E,E)-7,9,11-dodecatrien-1-yl acetate; (E,E)-7,9,11-dodecatrien-1-yl acetate; (Z,E)-7,9,11-dodecatrien-1-yl acetate; (Z,Z)-5,9-tridecadien-1-yl acetate; (E,Z)-5,9-tridecadien-1-yl acetate; tetradecan-1-yl acetate; (Z)-9-tetradecen-1-yl acetate; (E)-9-tetradecen-1-yl acetate; (Z)-11-tetradecen-1-yl acetate; (E)-11-tetradecen-1-yl acetate; (Z,E)-9,11-tetradecadien-1-yl acetate; (E,E)-9,11-tetradecadien-1-yl acetate; (Z,E)-9,12-tetradecadien-1-yl acetate; hexadecan-1-yl acetate; (Z)-11-hexadecen-l-yl acetate; (E)-11-hexadecen-1-yl acetate; octadecan-1-yl acetate; eicosan-1-yl acetate.
**Miscellaneous:** Butyl hexanoate; (Z,Z,Z,Z)-7,13,16,19-22-isobutyrate; (Z)-7,10-acetoxy-7-hexadecen-1-ol; (Z)-7,8-epoxy-2-methyloctadecane; (Z)-7,8-epoxy-2-methyloctadecane; (Z)-7,8-epoxy-2-methyloctadec-17-ene; 1,3,8-trihydroxy-6-methylanthracene-9,10-dione; 2-methyl-(Z)-7-octadecene; 2-phenylacetaldehyde

In one embodiment of the present invention the solid wax matrix comprises carnauba wax and codlemone. In this embodiment the wax may act as a lure to Codling Moths. Preferably, a 12mm cube of carnauba wax contains 1mg of codlemone, or a 12mm cube of carnauba wax contains 5mg of codlemone, or a 5mm cube of carnauba wax contains 5mg of codlemone or a 5mm cube of carnauba wax contains 1mg of codlemone.

The semiochemical used in the present invention is designed to attract arthropods, and in particular insects and preferably pest insects. The insects may include pests encountered in agriculture, horticulture, forestry and public health. Such insects include (among others) ants and termites, lepidopteran pests (moths), flies (e.g. fruit flies, tsetse flies, biting flies, houseflies and mosquitoes), cockroaches , coleopteran pests (e.g. beetle pests of forestry plantations).

In particular, the semiochemical of the present invention may be chosen to attract Cydia pomonella, Tinea pellionella, Tineola bisselliella, Grapholita molesta, Lobesia botrana, Chilo suppressalis, Plodia interpunctella, Ephestia elutella, Cadra cautella, Euproctis chrysorrhoea, Plutella xylostella, Helicoverpa armigera, Archips podana, Lymantria dispar, Heliothis virescens, Spodoptera exempta , Spodoptera frugiperda, Spodoptera litura and Epiphyas postvittana.

Preferably the solid wax matrix comprises from 0.001g to 15g of semiochemical, more preferably from 0.1g to 5g, most preferably from 1g to 2g of semiochemical.

In one embodiment of the present invention the solid wax matrix of the present invention comprises from 0.01 to 20 % by weight of a semiochemical, more preferably from 0.1% to 5%, more preferably still from 0.3 to 0.6 % by weight based on the total weight of the solid wax matrix and the semiochemcial.

In another embodiment of the present invention the solid wax matrix is a 12mm by 12mm by 12mm cube comprising 5mg of semiochemical.

It will be understood that more than one semiochemical may be present in the solid wax matrix of the present invention.

A variety of additives may be incorporated into the solid wax matrix of the present invention. These additives may be chosen such that they change and/or enhance the physical characteristics of wax. They may therefore be suitable for designing compositions having specific requirements as to the rate and/or amount of pheromone released. They may also act, for example, to protect the wax composition against destruction by weather conditions, etc.

Preferably, the solid wax matrix of the present invention comprises at least one additive. More preferably the additive comprises a UV blocker, a colourant, a plasticizer, an antimicrobial, an antioxidant, or a mixture thereof.

Ultraviolet blockers, such as beta-carotene or p-aminobenzoic acid may be present in the solid wax matrix. Ultraviolet blockers may protect the semiochemical from light degradation.

Colourants such as optical brighteners and commercially available colourants, including suitable food colourants may be included in the solid wax matrix..

Plasticisers, such as glycerine or soy oil may be included in the solid wax matrix. The presence of plasticizers typically effects the physical properties of the lure and may extend its resistance to environmental destruction.

Antimicrobials, such as potassium sorbate, nitrates, nitrites, and propylene oxide, may be present in the solid wax matrix. Antimicrobials may protect the semiochemical from microbial.

Antioxidants, such as vitamin E, BHA (butylated hydroxyanisole), BHT (butylated hydroxytoluene) and other antioxidants may be present in the solid wax matrix. These antioxidants may help to protect the semiochemical from degradation. Antioxidants may be present in the lure in a 1:1 weight ratio with the semiochemical. However, it will be understood that other suitable amounts may be used.

In another aspect of the present invention there is provided the use of the trap and/or dispenser as defined herein to attract an arthropod to the trap by the controlled release of the semiochemical.

In another aspect of the present invention there is provided the use of the trap and/or dispenser as defined herein in a monitoring technique.

In another aspect of the present invention there is provided the use of the trap and/or dispenser as defined herein in a lure and kill technique.

In one embodiment, a dispenser of the present invention may be used in a lure and kill technique. The insect may be attracted to the dispenser by the release of a pheromone. The insect then comes into contact with, for example, an insecticide in the dispenser. The insect then leaves the dispenser and subsequently dies as a result of its contact with the insecticide.

In another aspect of the present invention there is provided the use of the trap as defined herein to in a mass trapping technique.

In another aspect of the present invention there is provided the use of the dispenser as defined herein to monitor the population level of an arthropod.

In another aspect of the present invention there is provided the use of the dispenser as defined herein in mating disruption by an auto-confusion technique.

As previously discussed, traditional mating disruption techniques rely on the release of a high quantity of semiochemical into the atmosphere. When the background level of the semiochemical released is above a threshold, male insects are unable to locate female insects. The present applicant has developed a different approach to mating disruption, called an auto-confusion technique. In this auto-confusion technique a target area is not flooded with pheromone. Instead the target insect is attracted to a dispenser containing a lure. Upon entering the dispenser the insect comes into contact with particulates formulated with the sex pheromone of that species. These particulates become attached to the insect and are retained thereon. The particles attached to the target insect thereafter reduces the ability of the male to find females with whom they can mate due to the excess of sex pheromone released by the particles. The particles are transferred to males of the same species upon interaction. In this way mating is disrupted. Far fewer dispensers are utilised (for example, 25 per hectare instead of 400) and significantly less pheromone per dispenser is required (typically of the order of 3.5mg) than traditional MD (in the region of 40g pheromone per ha per season). Crucial to the efficacy of mating disruption by an auto-confusion technique is the attractant and its longevity in the field. Lepidoperan pests often have more than one generation per season and control of all generations, particularly the later generations, close to harvest, can be crucial.

Monitoring product/techniques, lure and kill techniques, and mass trapping techniques are well known techniques in the field of insect control.

In another aspect of the present invention there is provided the use of the trap and/or dispenser as defined herein wherein the arthropod is an insect.

In another aspect of the present invention there is provided the use of a lure comprising a solid wax matrix having a semiochemical dispersed therein to attract an arthropod by the controlled release of the semiochemical from the solid wax matrix.

It will be understood that all the features described herein in relation to the solid wax matrix comprised in the trap or dispenser apply equally to the solid wax matrix comprised in the lure of the present invention.

In a preferred embodiment of the present invention there is provided the use of lure comprising a solid wax matrix having at least one semiochemical dispersed and/or dissolved and/or encapsulated therein in a trap, dispenser or a bait station.

In a preferred embodiment of the present invention there is provided the use of a lure comprising a solid wax matrix having at least one semiochemical dispersed and/or dissolved and/or encapsulated therein to monitor the population level of an arthropod.

In a preferred embodiment of the present invention there is provided the use of lure comprising a solid wax matrix having at least one semiochemical dispersed and/or dissolved and/or encapsulated therein in a lure and kill technique.

In a preferred embodiment of the present invention there is provided the use of lure comprising a solid wax matrix having at least one semiochemical dispersed and/or dissolved and/or encapsulated therein in mating disruption by an auto-confusion technique.

In a preferred embodiment of the present invention there is provided the use of lure comprising a solid wax matrix having at least one semiochemical dispersed and/or dissolved and/or encapsulated therein in a mass trapping technique.

Preferably the arthropod is an insect.

In a further embodiment of the present invention the solid matrix for use in this aspect of the present invention may comprise a first region comprising a first wax and a first semiochemical dispersed therein, and a second region comprising a second wax and a second semiochemical dispersed therein. It will be understood that in this embodiment said first region and said second region may have differing components in differing quantities and may contain the same or different semiochemicals and/or waxes.

According to another aspect of the present invention there is provided a method of attracting a pest to a trap and/or a dispenser, the method comprising providing a trap and/or dispenser comprising the lure as described herein, wherein the semiochemical is released from said lure into said trap and/or dispenser and subsequently into the atmosphere, thereby attracting the pest to the trap and/or dispenser. Preferably in the methods described above the semiochemical is released from the solid wax matrix at a substantially zero-order rate for at least 50 days, 60 days, 70 days, 80 days, more preferably at least 90 days, 100 days, 110 days, most preferably at least 120 days.

The present inventors have surprisingly found that the inclusion of a second paraffin wax, for example, in a carnauba wax matrix is beneficial to increase the release rate of a semiochemical from the wax matrix. Without wishing to be bound by any theory, it is thought that the addition of paraffin wax is likely increase the release rate of a semiochemical because paraffin wax has little or no polarity. Polar compounds such as semiochemicals therefore have less affinity with the paraffin wax which will thus be released more quickly. Optimum compositions of the lures to control the release rate of the semiochemical are expected to differ depending on the particular semiochemical and wax composition.

Preferably the first wax is different from said second wax. More preferably the first wax and the second wax have different polarities.

The advantages of Carnauba wax as a lure are described above.

Preferably the lure of the present invention comprises from 10 to 99% by weight of a first wax, or from 30 to 99% by weight of a first wax, or from 50 to 99 % by weight of a first wax, more preferably from 60 to 80 % by weight, most preferably from 70 to 75 % by weight, based on the total weight of the lure.

Preferably the second wax present in the lure is paraffin wax.

Preferably the lure of the present invention comprises from 1 to 90% by weight of a second wax, or from 1 to 70% by weight of a second wax, or from 1 to 50 % by weight of a second wax, more preferably from 20 to 40 % by weight, most preferably from 25 to 30 % by weight, based on the total weight of the lure.

Preferably in the lure of the present invention the weight ratio of the first wax to the second wax is from 99:1 to 1:99, more preferably from 50:1 to 1:50, or from 10:1 to 1:10, more preferably still from 5:1 to 1:5, and most preferably 2:1 to 1:2. Preferably in the lure of the present invention the weight ratio of the first wax to the second wax is 99:1, 50:1, 25:1, 20:1, 10:1, 5:1, 2:1, 1:1, 1:2, 1:5, 1:10, 1:20, 1:25; 1:50 or 1:99

It will be understood that other waxes may also be included in the lure of the present invention. For example, the lure may comprise a third, fourth, etc. wax. The specific combination of waxes being determined by the specific characteristics desired.

Suitable semiochemicals for use in the lure of the present invention are those listed above in previous aspects of the current invention.

Preferably the lure of the present invention comprises from 0.01 to 20 % by weight of a semiochemical, more preferably from 0.1 to 5 % by weight, most preferably from 0.3 to 0.6 % by weight, based on the total weight of the lure.

It will be understood that more than one semiochemical may be present in the lure of the present invention.

Preferably the lure of the present invention is in the form of a solid wax matrix having the semiochemical dispersed therein. More preferably semiochemical is substantially evenly dispersed throughout the solid matrix.

In one embodiment the lure of the present invention may be in the form of a solid wax matrix having the semiochemical dissolved and/or dispersed and/or encapsulated and/or retained therein.

In further embodiment of the present invention the lure may comprise a first region comprising a first wax, a second wax, and a first semiochemical dispersed therein, and a second region comprising a first wax, a second wax and a second semiochemical dispersed therein. It will be understood that in this embodiment said first region and said second region may have differing components in differing quantities and may contain the same or different semiochemicals and/or waxes.

A variety of additives may be incorporated into lures of the present invention. These additives may be chosen such that they change and/or enhance the physical characteristics of the waxes. They may therefore be suitable for designing compositions having specific requirements as to the rate and/or amount of pheromone released. They may also act, for example, to protect the wax composition against destruction by weather conditions, etc.

Preferably, the lure of the present invention comprises at least one additive. More preferably the additive comprises a UV blocker, a colourant, a plasticizer, an antimicrobial, an antioxidant, or a mixture thereof. Examples of suitable examples of additives for use in the lure of the present invention are given above.

Ultraviolet blockers may be present in the lure in amounts from about 0.01 % to about 25% by weight, based on the total weight of the lure.

Antioxidants may be present in the lure in a 1:1 weight ratio with the semiochemical. However, it will be understood that other suitable amounts may be used.

The lure of the present invention may have the shape of a sphere, pyramid, cuboid, parallelepiped, tube, column, disc, or any other suitable polyhedron.

Preferably the lure has the shape of a cube. Preferably each dimension of the cube are less than 20mm by 20mm by 20mm. In further embodiments the cube may, for example, have dimensions in the range of from 30mm by 30mm by 30mm to 1mm by 1mm by 1mm, more preferably in the range of from 20mm by 20mm by 20mm to 3mm by 3mm by 3mm, most preferably in the range of from 15mm by 15mm by 15mm to 5mm by 5mm by 5mm.

Most preferably the cubes have the dimensions of 12mm by 12mm by 12mm or 5mm by 5mm by 5mm.

It will be understood that the lure of the composition may take a variety of shapes and sizes.

Preferably the lure of the present invention has a substantially zero order release rate.

Preferably the lure of the present invention has a substantially zero order release rate of the semiochemical from the wax for at least 50 days, 60 days, 70 days, 80 days, more preferably at least 90 days, 100 days, 110 days, most preferably at least 120 days.

According to a further aspect of the present invention there is provided a method of making the lure as defined herein comprising providing a first wax, a second wax and a semiochemical, combining said semiochemical with said first and/or said second wax; and forming the combined first wax, second wax and semiochemical into the lure.

In one embodiment of the present invention the combining step comprises the steps of dissolving a semiochemical in a solvent; contacting said solvent having the semiochemical dissolved therein with said first and/or second wax such that said semiochemical is absorbed and/or adsorbed into or onto said wax.

It will be understood that combining can be by any suitable method, for example, by melting, dissolving, absorbing, adsorbing, or compression.

In a preferred embodiment, the method comprises the steps of
a) heating the first and second wax until they are molten;
b) adding the semiochemical to the waxes;
c) mixing the waxes and semiochemical to form a homogenous mixture; and
d) forming a lure;
wherein step a) may be performed prior to, concomitantly with or subsequently to step b).

It will be understood that the first and second waxes may be heated together until molten or heated separately then mixed when molten.

According to another aspect of the present invention there is provided the use of a lure as described herein to attract a pest. Preferably the pest is an insect. It will be understood that the pest is attracted by the controlled release of the semiochemical.

According to another aspect of the present invention there is provided the use of a lure as described herein in a monitoring product/technique.

According to another aspect of the present invention there is provided the use of a lure as described herein in a lure and kill technique.

According to another aspect of the present invention there is provided the use of a lure as described herein in mating disruption by an auto-confusion technique.

According to another aspect of the present invention there is provided the use of a lure as described herein in a mass trapping technique.

In a preferred embodiment the trap and/or dispenser of the present invention comprises a lure as described herein.

It will be understood that all the features described herein in relation to the lure apply equally to the composition as described herein.

It will be understood that the lure of the present invention has a number of advantages over those described in the prior art. For example, the lures of the present invention are biodegradable as compared with other lure matrices. They can therefore be left to degrade in the field by the user.

Prior art lures must be collected and disposed of through the proper and legal means.

Preferably the lure and the solid wax matrix comprising a semiochemical as described herein is not designed for use in traditional mating disruption techniques, where a mass release of semiochemical causes the environment to be "fogged" with semiochemical, and wherein the arthropods are not attracted to the lure of solid wax matrix comprising a semiochemical.

In one preferred embodiment the solid wax matrix comprising the semiochemical and/or the lure of the present invention is partially encapsulated in an impermeable material such that the semiochemical may only be released from the solid wax matrix and/or lure from the non-encapsulated region. For example, the solid wax matrix comprising the semiochemical and/or the lure may be retained in an eppendorf tube or other suitable retaining means.

The following Examples further illustrate the present invention.

### Example 1: Viability of formulation method

This example describes how the wax formulation was prepared and then assessed to check the pheromone content.

Carnauba wax was melted in a pan on a hot plate at 105°C and was poured into 12mm³ mould blocks. Theses were allowed to cool and were weighed, giving an average of 1.4g per block. From this, it was calculated that 50mg of codlemone should be added to every 14g of molten carnauba wax to make ten 12mm³ cubes each containing 5mg. These cubes were made using technical grade 99% pure Codlemone (E,E)-8,10-Dodecadien-1-ol (E8E10-12OH) sourced from Bedoukian Research Inc., Danbury, Conn., US and the cubes were then cooled and stored in heat sealed aluminum sachets in a freezer for 1 month. They were then removed from the freezer and the pheromone was extracted from each cube by Soxhlet extraction with ethanol and analyzed by Gas Chromatography. The results showed that on average 97.5% of the initial loading was remaining in the cubes meaning only 2.5% was lost during manufacturing, storage for 1 month and analysis.

### Example 2: Release from two phase, 100% carnauba wax in an Eppendorf tube

In this experiment Eppendorf tubes were filled with two layers of molten carnauba wax containing different concentrations of Codlemone (E,E)-8,10-Dodecadien-1-ol (E8E10-12OH). Each wax also contained a range of compounds that had comparable molecular weights to codlemone but differed in their degree of unsaturation and polarity of the terminal functionality, these included (Z)-8-Dodecen-1-ol (Z8-12:OH), Dodecan-1-ol (12:OH), Decyl acetate (10Ac) and Tridecane (13HC). In the lower part of the tube, 0.75cm³ of molten carnauba wax containing 5mg of codlemone and the above compounds was poured in and allowed to solidify. The next step was to add a 0.25cm³ cap of molten carnauba wax with 1mg of codlemone and the above compounds to the top of the solid wax. The concept behind this experiment was that the upper layer would reduce the initial surge of pheromone that is an unwanted characteristic of all known lures when opened for the first time. The hope was that by putting a low dose in the upper layer, the initial surge would be smaller and as the pheromone in this low dose layer disappeared it would be replaced by a steady flow of pheromone permeating through it from the higher concentration layer beneath.
The lures were formulated and immediately frozen and stored in impermeable aluminum sachets until they were placed into an entrainment system comprising a sealed glass sample chamber and an adsorbent tube filled with Porapak Q, obtained from Supelco, Bellefonte, PA. Semiochemical(s) released over 2-hour intervals were transferred to the adsorbent by use of a vacuum pump, and eluted for GC/GC-MS analysis using dichloromethane.
Following the initial release check, the lures were placed into a wind tunnel with a controlled airflow (5km/h) and temperature (27°C) to simulate extreme field ageing conditions. The Eppindorf lures were then repeatedly removed and retested in the entrainment system on numerous occasions over the following 20 days to retest the release rates.

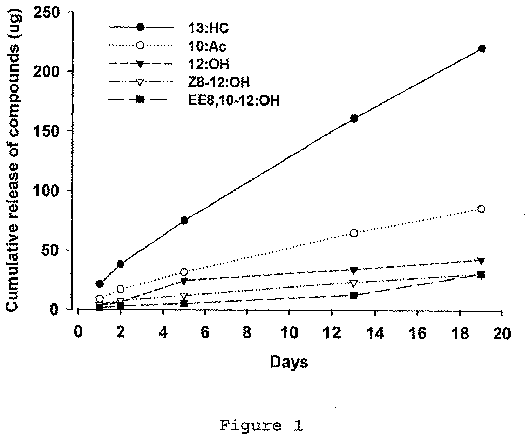

The results of this experiment are shown in Figure 1 and indicate that the release rate of compounds from the Eppendorf wax lures was inversely proportional to the polarity of the compounds. Thus, Tridecane (13:HC) releases much more quickly than Decyl Acetate (10:Ac) with all three more polar alcohol 12:OHs again releasing more slowly.

### Example 3: Release rates from carnauba wax cubes, 2 sizes, 2 doses

The purpose of this experiment was to assess the impact of changing the size of the cube but keeping the dosage the same and also by changing the dosage of equal sized cubes. The formulation method was the same as in Example 1; the pheromone analysis was the same as in Example 2. The results indicated that a smaller cube with a larger surface area to volume ratio gave the highest release rate. When comparing lures of equal sizes with different loadings it was clear that the higher dose lure initially released more pheromone than the lower dose lure but this effect began to level out in the larger cubes as the release approached a zero order pattern.

### Example 4: Secondary wax inclusions

The purpose of this experiment was to assess how the inclusion of a secondary less polar wax would affect the release rates of various compounds including codlemone. Wax cubes with carnauba to paraffin wax were made in the following ratios 100:0, 95:5, 90:10, 80:1, 50:1 with each containing

Codlemone (E,E)-8,10-Dodecadien-1-ol (E8E10-12OH), (Z)-8-Dodecen-1-ol (Z8-12:OH), Dodecan-1-ol (12:OH), Decyl acetate (10Ac), Dodecyl acate (12Ac) and Tridecane (13HC). They were then placed into entrainment system as described in Example 2 and the release of these compounds was measured from each cube. The cubes were then aged in the same wind tunnel as in Experiment 2 before being retested on several occasions over the following 60 days. The initial results suggest a linear relationship between the amount of paraffin wax included and the release rate.

## Claims

1. A solid wax matrix lure for attracting arthropods comprising:
from 50 to 99 % by weight of a first wax that is carnauba wax;
a second wax selected from paraffin wax, beeswax, lanolin, shellac wax, bayberry wax, sugar cane wax, ozocerite, ceresin wax, montan wax, candelilla wax, castor wax, microcrystalline wax, ouricury wax and rice bran wax; and
from 0.01 to 20% by weight of a semiochemical based on the total weight of the lure.

2. The lure according to claim 1, wherein the second wax is paraffin wax.

3. The lure according to any one of the preceding claims in the shape of a sphere, pyramid, cuboid, parallelepiped, tube, column, disc or other suitable polyhedron.

4. The lure according to any one of the preceding claims, wherein the semiochemical is a pheromone.

5. The lure according to any one of the preceding claims, comprising at least one of a UV blocker, a colourant, a plasticizer, an antimicrobial, an antioxidant or a mixture thereof.

6. Use of a lure as defined in any one of the preceding claims to attract an arthropod by the controlled release of the semiochemical.

7. Use according to claim 6 in a monitoring product / technique.

8. Use according to claim 6 in a lure and kill technique.

9. Use according to claim 6 in mating disruption by an auto-confusion technique.

10. Use according to claim 6 in a mass trapping technique.

11. Use according to any one of claims 6 to 10, wherein the arthropod is an insect.

## Patentansprüche

1. Köder aus fester Wachsmatrix zum Anlocken von Arthropoden, umfassend:
von 50 bis 99 Gew.-% eines ersten Wachses, das Carnaubawachs ist;
ein zweites Wachs, ausgewählt aus Paraffinwachs, Bienenwachs, Lanolin, Schellackwachs, Myrtenwachs, Zuckerrohrwachs, Ozokerit, Ceresinwachs, Montanwachs, Candelillawachs, Castorwachs, mikrokristallinem Wachs, Ouricurywachs und Reiskleiewachs; und
von 0,01 bis 20 Gew.-% einer Semiochemikalie auf Grundlage des Gesamtgewichts des Köders.

2. Köder nach Anspruch 1, wobei das zweite Wachs Paraffinwachs ist.

3. Köder nach einem der vorstehenden Ansprüche in der Form einer Kugel, Pyramide, eines Quaders, Parallelepipeds, einer Röhre, Säule, Scheibe oder eines anderen geeigneten Polyeders.

4. Köder nach einem der vorstehenden Ansprüche, wobei die Semiochemikalie ein Pheromon ist.

5. Köder nach einem der vorstehenden Ansprüche, umfassend mindestens eines aus einem UV-Blocker, einem Farbstoff, einem Weichmacher, einem Antimikrobiotikum, einem Antioxidans oder eine Mischung davon.

6. Verwendung eines nach einem der vorstehenden Ansprüche definierten Köders zum Anlocken eines Arthropoden durch die gesteuerte Freisetzung der Semiochemikalie.

7. Verwendung nach Anspruch 6 in einem Produkt/einer Technik zur Überwachung.

8. Verwendung nach Anspruch 6 in einer Technik zum Anlocken und Töten.

9. Verwendung nach Anspruch 6 bei Paarungsstörung durch eine Autokonfusionstechnik.

10. Verwendung nach Anspruch 6 in einer Massenfangtechnik.

11. Verwendung nach einem der Ansprüche 6 bis 10, wobei der Arthropode ein Insekt ist.

## Revendications

1. Appât en matrice de cire solide destiné à attirer des arthropodes constitué de : 50 à 99 % massique d'une première cire qui est de la cire de carnauba ;
une deuxième cire sélectionnée parmi de la paraffine, cire d'abeille, lanoline, cire de gomme-lac, cire de baie de laurier, cire au sucre de canne, ozocérite, cérésine, cire de lignite, cire de candélilla, cire de ricin, cire microcristalline, cire d'Ouricury et cire de riz ; et
0,01 à 20 % massique d'un composé sémiochimique basé sur le poids total de l'appât.

2. Appât selon la revendication 1, dans lequel la deuxième cire est de la paraffine.

3. Appât selon l'une quelconque des revendications précédentes, ayant la forme d'une sphère, une pyramide, un cuboïde, un parallelépipède, un tube, une colonne, un disque ou un autre polyèdre approprié.

4. Appât selon l'une quelconque des revendications précédentes, dans lequel le composé sémiochimique est une phéromone.

5. Appât selon l'une quelconque des revendications précédentes, comprenant au moins élément parmi un anti-UV, un colorant , un plastifiant, un antimicrobien, un antioxydant ou un mélange de ceux-ci.

6. Utilisation d'un appât selon l'une quelconque des revendications précédentes, pour attirer un arthropode par la libération contrôlée du composé semiochimique.

7. Utilisation selon la revendication 6, dans un produit / une technique de surveillance.

8. Utilisation selon la revendication 6, dans une technique attracticide.

9. Utilisation selon la revendication 6 dans une perturbation d'accouplement par une technique d'auto-confusion.

10. Utilisation selon la revendication 6, dans une technique de piégeage de masse.

11. Utilisation selon l'une quelconque des revendications 6 à 10, dans laquelle l'arthropode est un insecte.
